Europäisches Patentamt

European Patent Office

Office européen des brevets

(19)

(11) Veröffentlichungsnummer: **0 264 108 B1**

(12) **EUROPÄISCHE PATENTSCHRIFT**

(45) Veröffentlichungstag der Patentschrift: **25.03.92**

(21) Anmeldenummer: **87114960.5**

(22) Anmeldetag: **13.10.87**

(51) Int. Cl.⁵: **G02B 6/38**

(54) **Verbindungselement für Lichtwellenleiter.**

(30) Priorität: **16.10.86 DE 3635274**

(43) Veröffentlichungstag der Anmeldung:
**20.04.88 Patentblatt 88/16**

(45) Bekanntmachung des Hinweises auf die
Patenterteilung:
**25.03.92 Patentblatt 92/13**

(84) Benannte Vertragsstaaten:
**AT BE CH DE FR GB IT LI NL SE**

(56) Entgegenhaltungen:
**EP-A- 72 637**
**EP-A- 0 189 946**
**DE-A- 3 408 783**
**GB-A- 2 041 566**
**JP-A- 5 744 113**

**PATENT ABSTRACTS OF JAPAN, Band 3, Nr.
110 (E-137), 14. September 1979; & JP - A - 54
87239**

(73) Patentinhaber: **SIEMENS AKTIENGESELL-
SCHAFT
Wittelsbacherplatz 2
W-8000 München 2(DE)**

(72) Erfinder: **Finzel, Lothar, Dipl.-Ing.
Forstenrieder Allee 4
W-8000 München 71(DE)**

**Beschreibung**

Die Erfindung betrifft ein Verbindungselement für mehrere Lichtleitfasern mit zwei fluchtend angeordneten Trägerkörpern, die die Lichtleitfasern in jeweils mehreren, parallel verlaufenden, v-förmigen Zentrierrillen aufnehmen und beiderseits der Zentrierrillen Führungsnuten aufweisen, in denen entsprechend angepaßte, beide Trägerkörper überdeckende Führungsschienen eingreifen und mit auf den Lichtwellenleitern aufliegenden Abdeckplatten, wobei Immersionsflüssigkeit stirnseitig auf den Trägerkörper aufgebracht und für die gegenseitige Befestigung von Lichtleitfasern, Abdeckplatten und Trägerkörpern Klebematerial vorgesehen ist.

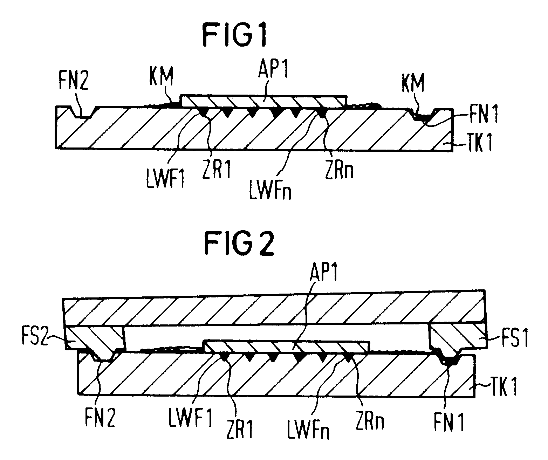

Ein Verbindungselement dieser Art ist aus der DE-OS 34 08 783 bekannt. Die entmantelten Lichtleitfasern werden dabei durch eine Abdeckplatte in die v-förmigen Zentrierrillen je eines Trägerkörpers gedrückt und dadurch zwangsausgerichtet. Nach dem Einlegen der Lichtwellenleiter wird die Abdeckplatte mit dem Trägerkörper verklebt, indem das Klebematerial im Bereich der Lichtwellenleiter z.B. von der Stirnseite her eingebracht wird. Infolge der Kapillarwirkung der Zentrierrillen und durch den engen Spalt zwischen Abdeckplatte und Trägerkörper dringt das Klebematerial in die vorhandenen Hohlräume ein und verbindet auf diese Weise Trägerkörper, Abdeckplatte und Lichtleitfasern miteinander. Die Kapillarwirkung kann aber nur bei geringer Viskosität des Klebematerials ausgenutzt werden. Dies kann dazu führen, daß sich - wie Fig. 1 zeigt - das Klebematerial KM beim Auftragen so über die Oberfläche des mit der Abdeckplatte AP1 bedeckten Trägerkörpers TK1 verteilt, daß es sich in die beiderseits der Zentrierrillen ZR1-ZRn liegenden Führungsnuten FN1,FN2 eindringt, dort aushärtet und das Einlegen von Führungsschienen FS1, FS2 behindert, wie sie in Fig. 2 dargestellt sind.

Ebenso nachteilig kann das Zerfließen der Immersionsflüssigkeit sein, die stirnseitig auf den Trägerkörper TK1 vor dem Zusammenfügen mit dem zweiten Trägerkörper aufgebracht wird. Die Immersionsflüssigkeit verteilt sich dabei an den Stirnseiten des Trägerkörpers TK1 und kann in die Führungsnuten FN1 bzw. FN2 einfließen und kann daraufhin die Führungsschienen FS1 bzw. FS2 aus ihrer definierten Auflage herausdrücken. Die beiden zu verbindenden, mit den Lichtleitfasern LWF1-LWFn bestückten Trägerkörper liegen dann nicht mehr exakt fluchtend zueinander, wodurch eine höhere Dämpfung unvermeidbar ist.

Aus der japanischen Patentanmeldung JP-A 57-44 113 ist ein Lichtwellenleiter-Element bekannt, bei dem die Zentrierrillen für die Lichtwellenleiter in einer schachtartigen Vertiefung angeordnet sind und dort von einer Abdeckplatte gehalten werden.

Die schachtartige Vertiefung bietet die Möglichkeit, daß dort im gewissen Umfang Klebematerial oder dergleichen aufgenommen werden kann und somit verhindert wird, daß dieses zu seitlich angeordneten Führungsnuten gelangt. Nachteilig an dieser Anordnung ist, daß die schachtartige Vertiefung für die Aufnahme der Lichtleitfasern zusätzlich hergestellt z.B. ausgeätzt werden muß.

Aus der EP-A3 0 072 637 ist ein Lichtwellenleiter-Verbinder bekannt, bei dem rings um die Spleißstelle eine grabenartige Vertiefung herumgeführt ist, die ebenfalls zusätzlich in den Trägerkörper eingeätzt werden muß.

Der Erfindung liegt die Aufgabe Zugrunde, ein Verbindungselement der eingangs genannten Art mit einfachen Mitteln derart auszugestalten, daß ein Eindringen von Klebematerial bzw. Immersionsflüssigkeit in die Führungsnuten unterbunden werden kann. Die gestellte Aufgabe wird bei einem Verbindungselement der eingangs genannten Art dadurch gelöst, daß die Seitenflächen der Abdeckplatten dadurch als Auffangflächen für das Klebematerial dienen, daß sie abgeschrägt ausgebildet sind und von der an den Lichtwellenleitern anliegenden Abdeckfläche aus keilförmig nach außen verlaufen.

Bei der Erfindung ist es somit nicht notwendig, zusätzliche Vertiefungen, Rillen oder dergleichen bei den Trägerkörpern vorzusehen. Vielmehr genügt eine einfache seitliche Abschrägung an den Abdeckplatten um einen Auffangbereich zu schaffen, in dem sich das Klebematerial unter Ausnutzung der Oberflächenspannung sammelt und damit an einem weiteren Vordringen gehindert wird.

Weiterbildungen der Erfindung sind in den Unteransprüchen wiedergegeben.

Die Erfindung und ihre Weiterbildungen werden anhand von Zeichnungen näher erläutert. Es zeigen:

Fig. 3     ein Ausführungsbeispiel der Erfindung in perspektivischer Darstellung,

Fig. 4     eine Einzelheit zur Ausführung nach Fig. 3 in vergrößerter Darstellung.

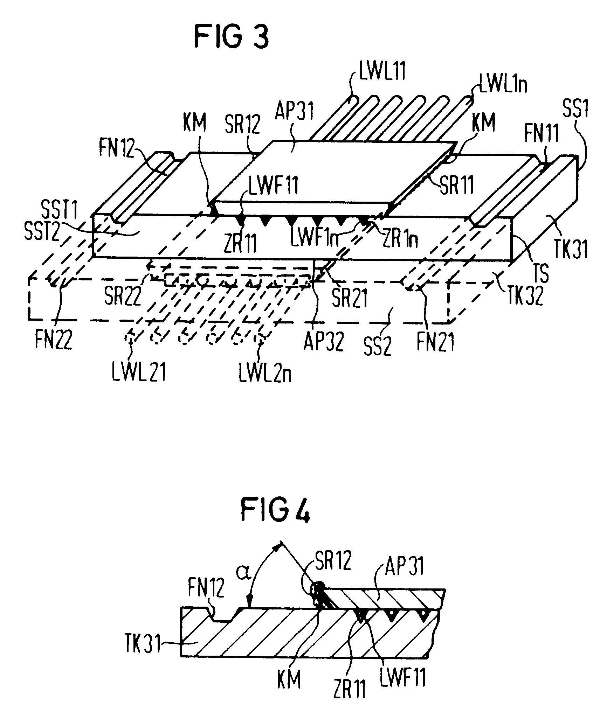

In Fig. 3 ist ein mit TK31 bezeichneter Trägerkörper mit einer Abdeckplatte AP31 gezeigt, wobei der zweite identische Trägerkörper TK32, der mit seiner Stirnseite SST2 an der Trennstelle TS an die Stirnseite SST1 des ersten Trägerkörpers TK131 fluchtend anliegt, gestrichelt dargestellt ist. Im Mittelbereich der vorteilhaft aus ätzbarem Material bestehenden Trägerkörper TK31 sind Zentrierrillen ZR11-ZR1n zur Aufnahme der entmantelten Lichtleitfasern LWF11-LWF1n eingeätzt. Gleiches gilt für den Trägerkörper TK32. An den seitlichen Rändern der Trägerkörper TK31 bzw. TK32 befinden sich Führungsnuten FN11 und FN12 bzw. FN21 und FN22, die zur Ausrichtung der beiden Trägerkörper TK31 und TK32 dienen, indem hier nicht dargestellte Führungselemente mit entsprechend angepaßten Profilen in diese Führungsnuten FN11, FN21 und FN12, FN22 eingefügt werden.

Um das Ausbreiten von überschüssigem Klebematerial KM auf den Oberflächen der Trägerkörper TK31 bzw. TK32 zu verhindern, sind wie in Fig. 3 dargestellt die längsseitigen Flächen SR11,SR12 und SR21,SR22 der Abdeckplatten AP31 und AP32 abgeschrägt und bilden die Auffangflächen für das Klebematerial. Die derart trapezförmig ausgebildeten Abdeckplatten AP31 und AP32 liegen mit ihren kleineren Flächen auf den Zentrierrillen z.B. ZR11-ZR1n, so daß die abgeschrägten Flächen SR11,SR12 bzw. SR21,SR22 der Abdeckplatten AP31 bzw. AP32 keilförmig nach außen verlaufen.

Dabei ist der Winkel $\alpha$ so zu wählen, daß das überschüssige Klebematerial KM, wie in Fig. 4 dargestellt, durch Oberflächenspannung an den seitlichen Flächen z.B. SR11 der Abdeckplatten AP31 hochsteigt und sich dort längsseitig verteilt. Durch diese einfache konstruktive Maßnahme ist gewährleistet, daß das überschüssige Klebematerial KM sich nicht an den Oberflächen der Trägerkörper TK31 bzw. TK32 ausbreitet, wodurch die zu schützenden Führungsnuten z.B. FN12 frei von Klebematerial KM bleiben. Zweckmäßigerweise wird der Winkel spitzwinklig, insbesondere zwischen 30° und 45°, vorzugsweise um 35° gewählt.

**Patentansprüche**

1. Verbindungselement für mehrere Lichtleitfasern (LWL11-LWL1n, LWL21-LWL2n) mit zwei fluchtend angeordneten Trägerkörpern (TK31, TK32), die die Lichtleitfasern (LWF11-LWF1n) in jeweils mehreren parallel verlaufenden, v-förmigen Zentrierrillen (ZR11-ZR1n) aufnehmen und beiderseits der Zentrierrillen (ZR11-ZR1n) Führungsnuten (FN11,FN12) aufweisen, in denen entsprechend angepaßte, beide Trägerkörper (TK31,TK32) überdeckende Führungsschienen eingreifen und mit auf den Lichtleitfasern (LWL11-LWL1n; LWL21-LWL2n) aufliegengen Abdeckplatten (AP31,AP32), wobei Immersionsflüssigkeit stirnseitig auf den Trägerkörper (TK1) aufgebracht und für die gegenseitige Befestigung von Lichtleitfasern (LWF11-LWF1n), Abdeckplatten (AP31,AP32) und Trägerkörpern (TK31,TK32) Klebematerial (KM) vorgesehen ist,
**dadurch gekennzeichnet,**
daß die Seitenflächen (SR11, SR12; SR21, SR22) der Abdeckplatten (AP31, AP32) dadurch als Auffangflächen für das Klebematerial (KM) dienen, daß sie abgeschrägt ausgebildet sind und von der an den Lichtwellenleitern (LWL11-LWL1n); LWL21-LWL2n) anliegenden Abdeckfläche aus keilförmig nach außen verlaufen.

2. Verbindungselement nach Anspruch 1,
**dadurch gekennzeichnet,**
daß der zwischen den Seitenflächen (SR11,SR12; SR21,SR21) und dem Trägerkörper (TK31,TK32) gebildete Winkel ($\alpha$) zwischen 30° und 45°, vorzugsweise um 35° gewählt ist.

**Claims**

1. Connector element for a plurality of optical fibres (LWL11-LWL1n, LWL21-LWL2n), having two carrier members (TK31, TK32) arranged in alignment and which in each case receive the optical fibres (LWF11-LWF1n) in a plurality of v-shaped centring grooves (ZR11-ZR1n) extending in parallel and have on both sides of the centring grooves (ZR11-ZR1n) guide grooves (FN11, FN12) in which correspondingly matched guide rails spanning the two carrier members (TK31, TR32) engage, and having cover plates (AP31, AP32) lying on the optical fibres (LWL11-LWL1n; LWL21-LWL2n), immersion fluid being applied to the carrier member (TK1) at the end face and an adhesive material (KM) being provided for mutually fastening the optical fibres (LWF11-LWF1n), cover plates (AP31, AP32) and carrier members (TK31, TK32), characterised in that the side faces (SR11, SR12; SR21, SR22) of the cover plates (AP31, AP32) serve as collecting surfaces for the adhesive material (KM) by being constructed bevelled and extending outwards in the shape of a wedge from the cover surface bearing on the optical fibres (LWL11-LWL1n; LWL21-LWL2n).

2. Connector element according to Claim 1, characterised in that the angle ($\alpha$) formed between the side faces (SR11, SR12; SR21, SR22) and the carrier member (TK31, TK32) is chosen between 30° and 45°, preferably approximately 35°.

**Revendications**

1. Élément de connexion ou de liaison pour fibres optiques (LWL11-LWL1n, LWL21-LWL2n) comportant deux corps de support (TK31,TK32) alignés l'un sur l'autre et qui logent les fibres optiques (LWF11-LWF1n) dans plusieurs rainures respectives parallèles de centrage en forme de V (ZR11-ZR1n) et comportent, des deux côtés des rainures centrales (ZR11-ZR1n), des rainures de guidage (FN11,FN12), dans lesquelles s'engagent des rails de guidage adaptés de façon correspondante et recouvrant les deux corps de support (TK31, TK32), et des plaques de recouvrement (AP31,AP32) situées sur les fibres optiques (LWL11-LWL1n; LWL21-LWL2n), et dans lequel un liquide d'immersion est déposé frontalement sur le corps de support (TK1) et une colle (KM) est prévue pour la fixation réciproque des fibres optiques (LWF11-LWF1n), des plaques de recouvrement (AP31,AP32) et des corps de support (TK31,TK32), caractérisé par le fait que les surfaces latérales (SR11,SR12; SR21,SR22) des plaques de recouvrement (AP31,AP32) sont utilisées en tant que surfaces de collecte pour la colle (KM) par le fait qu'elles sont biseautées et s'étendent en direction de l'extérieur avec une forme en coin à partir des surfaces de recouvrement appliquées sur les guides d'ondes optiques (LWL11-LWL1n; LWL21-LWL2n).

2. Élément de connexion suivant la revendication 1, caractérisé par le fait que l'angle ($\alpha$) entre les surfaces latérales (SR11,SR12; SR21,SR22) et le corps de support (TK31,TK32K) est choisi entre 30° et 45° et de préférence égal à 35°.

# FIG 1

FN2    KM              AP1              KM
                                              FN 1
                                              TK 1

LWF1   ZR1    LWFn    ZRn

# FIG 2

                      AP1
FS2                                           FS1

                                              TK 1

FN2    LWF1   ZR1    LWFn    ZRn    FN 1

## FIG 3

## FIG 4